# EUROPEAN PATENT SPECIFICATION

(11) **EP 1 873 986 B1**
(45) Date of publication and mention of the grant of the patent: **15.10.2008**
(21) Application number: 06116394.5
(22) Date of filing: 30.06.2006
(51) Int. Cl.: H04L 12/58

(54) **Automatic data synchronization**
Automatische Datensynchronisation
Synchronisation automatique de données

(43) Date of publication of application: 02.01.2008
(73) Proprietor: Research In Motion Limited, Waterloo, Ontario N2L 3W8 (CA)
(72) Inventor: Adams, Neil, Waterloo Ontario, N2K 4E4 (CA)
(74) Representative: Rickard, David John

(56) References cited:
- WO-A2-01/78319
- US-A1- 2005 055 386

## Description

The use of electronic communications for both business and personal purposes has been increasing in the past few years. The use of email has caused people to place an increasing reliance on email as one of the main means by which to communicate with others. This increasing reliance has given rise to the development and proliferation of email capable handheld or portable computing devices. Such devices, whether they be personal digital assistants (PDAs) or dedicated wireless email devices, are now capable of receiving and sending email without the need for a personal computer.

Currently, such handheld computing devices with an email capability are able to synchronize with a user's personal computer, thereby allowing the user to receive email either through their personal computer or through their handheld computing device. Synchronizing between the personal computer and the handheld computing device allows the status of emails between the two platforms to be synchronized. Thus, an email which was read on the user's computer, will be marked as already being read on the handheld computing device. This can be extremely helpful especially if the two platforms can retrieve email independently of one another from a central email server.

However, even though current devices allow for synchronization between the two platforms, such synchronization can usually occur when the user expressly initiates the synchronization process or after a predetermined period of time. An automated synchronization process helps and is available but such an option does not take into account the possibility that the user may receive email at both platforms while he is away from his personal computer. To ensure that email accessed and read on the handheld device is marked as such on the personal computer or that email already accessed on the personal computer is marked as such on the handheld device, the user must initiate a manual synchronization between the two platforms. Alternatively, the user may need to wait for a regularly timed automatic synchronization to ensure that the emails on the personal computer and on the handheld device are in the same state. A further alternative would be to manually sift through the emails on each platform.
[0003a] Our earlier patent application WO-A-01/78319 discloses a system in which an event triggers the forwarding of emails from a host system, in this case a desk top computer, to a mobile device. Various "events" are discussed that trigger the forwarding of emails. The mobile device is synchronized with the desktop computer at intervals to ensure that email data on the computer is consistent with email data on the mobile device. This disclosure is not concerned with a system in which computer and mobile device receive emails from a server.

Based on the above, there is therefore a need for solutions which address the above issues.

### GENERAL

[0004a] In one aspect there is provided a method for ensuring data synchronization between specific data on a server and data on a handheld computing device, in a communication system in which the handheld communication device can communicate with a computer via a short range wireless link, the computer is coupled to the server, and both the computer and the handheld communication device receive said specific data from the server, the method comprising detecting a change in status of the short range wireless link between said computer and said handheld computing device; and automatically initiating a synchronization process on said server to synchronize said specific data between said server and said handheld computing device in response to detecting said change in status.
[0004b] In another aspect there is provided a system for ensuring data synchronization between specific data on a server and data on a handheld computing device, in a communication system in which the handheld computing device can communicate with a computer via a short range wireless link, the computer is coupled to the server, and both the computer and the handheld computing device receive said specific data from the server, the system comprisingmeans for detecting a change in status of the short range wireless link between said computer and said handheld computing device; and means for automatically initiating a synchronization process on said server to synchronize said specific data between said server and said handheld computing device in response to detecting said change in status.
[0004c] In another aspect there is provided a computer having means for establishing a short range radio link with a handheld computing device, means for receiving specific data from a server, means for detecting a change in status of the short range wireless link between said computer and said handheld computing device, and being configured automatically to initiate a synchronization process on said server to synchronize said specific data between said server and said handheld computing device in response to detecting said change in status.
[0004d] In another aspect there is provided a handheld computing device having means for establishing a short range radio link with a computer, means for receiving specific data from a server, means for detecting a change in status of the short range wireless link between said computer and said handheld computing device, and being configured automatically to initiate a synchronization process on said server to synchronize said specific data between said server and said handheld computing device in response to detecting said change in status.
[0004e] There is also provided computer readable media having embodied thereon computer readable code for causing a computing device or system to perform the method described above.

### BRIEF DESCRIPTION OF THE DRAWINGS

A better understanding of the proposed solution which serves to overcome the deficiencies of the prior art will be obtained by considering the detailed description below, with reference to the following drawings in which:

Figure 1 is a block diagram of a system on which the present solution may be practiced;

Figure 2 is a flowchart of a method according to the present solution; and

Figure 3 is a flowchart of a method according to the present solution implementing a specific embodiment of the solution.

### DESCRIPTION OF PREFERRED EMBODIMENTS

The following description discusses methods and systems for automatically synchronizing data between an email server and a handheld computing device based on an event occurring on a personal computer communicating with the server. A module in the personal computer monitors events in the operating system of the personal computer that signifies that the user is either away from the vicinity of the computer or is about to leave the computer. Upon detecting these events, the module initiates an automatic synchronization of data between the server and the handheld computing device. This way, emails which have already been seen or responded to by the user on the computer will appear as such on the handheld computing device.

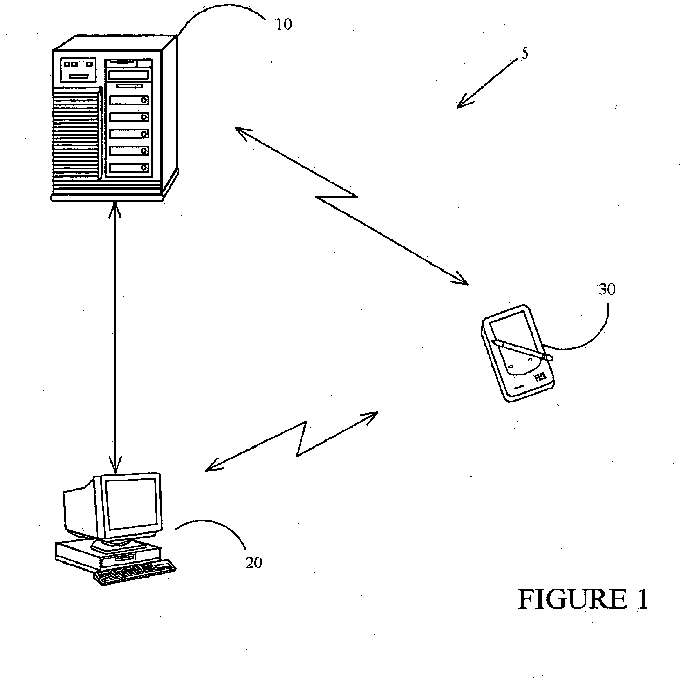

Current handheld computing devices that have an email capability can have their data usually synchronized with a server through the handheld device upon manual activation by a user. Some systems allow for automatic synchronization at specific time intervals. These systems, however, do not synchronize upon the detection of events which indicate that the user is about to leave the computer or that the user has left the vicinity of the computer.
Referring to Fig 1, a system 5 which uses the solution explained in this document is illustrated. A server 10 (illustrated as an email server) is coupled to or in communication with a personal computer 20. The personal computer 20 receives data from the server 10 that is related to a user such as that user's email, calendar, contacts, email lists, etc. A user can thus access these and other server stored information through the personal computer 20. A handheld computing device 30 with an email capability is also capable of communicating with the computer 20, either via a cable or a short-range wireless link, such as a Bluetooth compatible wireless link. The data on the server 10 and on the device 30 may be synchronized by a user-initiated synchronization process. Such a process would ensure that data previously accessed by the user through or received through the computer 20 from the server 10 and data on the device 30 are synchronized. Such a process also ensures that the data server 10 is synchronized with the data on the device 30. It should be noted that such data may also be stored on the computer 20 - the server 10 usually ensures that data stored on the computer 20 is kept synchronized with the data on the server 10.

It should be noted that the server 10 communicates with the device 30 via a wireless link and may do so independently of the computer 20. The server 10 may use "push" technology to send data, such as email, to the device 30 even when the device 30 is not in the vicinity of either the computer 20 or the server 10. In the email example, the same emails are sent by the server 10 to the computer 20 when the computer is turned on. In the case of email, a user can access email either through the computer 20 or the device 30. However, if the user has read or responded to an email on the device 30, that same email is listed as being unread on the computer 20 and vice versa. Synchronizing the data between the server 10 and the device 30 addresses this concern as, after synchronization, data previously accessed on one platform (either the computer 20 or the device 30) is shown or marked as already having been accessed on the other platform.

It should further be noted that the synchronization process may be initiated by the user using either the device 30 or the computer 20. One some systems, a synchronization of data is automatically initiated after a set time interval. However, while useful, such an option, if the time interval is too small, would unduly use up the bandwidth or airtime for the wireless link between the server 10 and the device 30.

An automatic synchronization 10 is quite useful when coupled with a suitable means for determining when the synchronization is to occur. To save the user the effort of having to manually initiate a synchronization when he leaves his desk or when he comes back to his desk or the effort of having to wait for a time determined automatic synchronization, the system could initiate an automatic synchronization when an event occurs which indicates that the user has left his computer or is about to leave his computer or has returned to his desk. Such an event can be the detection of a computer shutdown, a locking up of the computer, an activation of a screen saver, an indication that the device (and hence the user) is physically moving away from the computer, or any other event which may indicate that the user has left the computer. Similarly, the event can also be an indication that the user has returned to his desk. Such an event can be the detection of the computer powering up, an unlocking of the computer by the user logging onto the computer, a deactivation of a screen saver, or other indications that the device (and hence the user) has returned to the computer.

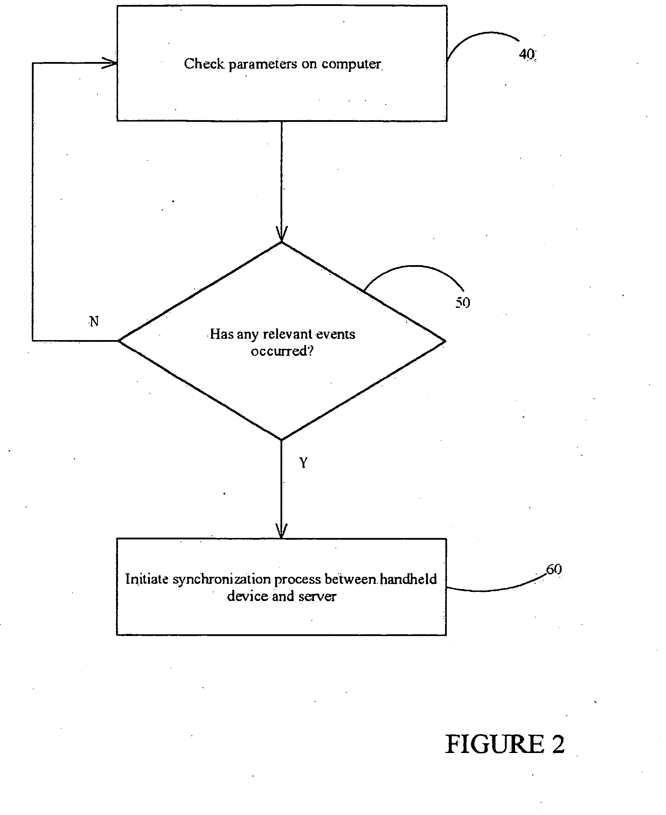

A flowchart of a method according to the above is illustrated in Fig 2. The method starts by checking software parameters in the computer 20 to determine if one or more of a number of events have occurred (step 40). Step 50 decides, after the checking in step 40, if any of the specific events have occurred. If any of the events have not occurred, then the logic flow returns to step 40. If the events have occurred, then a synchronization process is initiated (step 60).

The detection of the relevant event may be accomplished in numerous ways. Depending on the operating system on the computer 20 and on the event being detected, detection can be as simple as waiting for a specific message from the operating system. As an example, for the Windows^{™} operating system, a system shutdown can be detected by listening for a specific message from the operating system. In the Windows^{™} operating system, when a shutdown is about to occur, a specific message (WM_QueryEndSession) is sent by the operating system to all open applications or processes. Thus, when this message is received by an open application, the open application can initiate a synchronization process and may delay the system shutdown until the synchronization process is completed. The system shutdown may not even need to be delayed as the synchronization process is executed at the server 10 and not at the computer 20. Thus, the computer 20, when a system shutdown is detected by a specific application, can send a message to the server 10 to initiate a synchronization process.

Another example of detecting a specific event can be that of detecting the initiation or the execution of the operating system's screen saver. Since screen saver programs are usually started after a given interval of inactivity on the computer, the initiation of a screen saver is a good indication that a user is probably away from his computer. For the Windows^{™} operating system, (Windows 2000 and later versions), the function SystemParametersInfo can be called with the flag SPI_GETSCREENSAVERRUNNING to determine whether a screen saver is running. If the flag indicates that a screen saver is running, then the system can initiate the synchronization process with a suitable message to the server. Other events which indicate a lack of activity on the computer for a predetermined amount of time may also be detected. One of these events may be a locking process that is used in conjunction with or in place of a screen saver program. The occurrence of some of these events, such as the locking process, may be determined by calling similar functions to that called to detect the screen saver program.

As noted above, the event to be detected which would automatically initiate a synchronization may indicate that a user has returned to the computer. Depending on the event being detected, this may be done in various ways. For Windows-based systems, if a synchronization is to be initiated after a user initially logs in to the computer or after the computer is initially turned on, a small stand alone applet may be created which would be placed in the "Startup" directory. Execution of this applet would initiate a synchronization. Since all the programs in the "Startup" directory are automatically executed when the computer is started up (either a cold boot, an initial logging in of a user, or a soft boot), then this approach ensures that a synchronization is initiated every time the computer is started up.

Conversely, if the event to be detected is the shutdown of a program such as a screen saver (i.e. indicating that a user has returned to his computer), then prudent use of the screen saver flag noted above may be used. Since the flag indicates when a screen saver is running, then a flag transition from a "screen saver running" state to a "screen saver not running" state can be used to trigger the synchronization. A flag's present value, one of which is predetermined to indicate that a screen saver is running, this value can be saved as a past value for the next comparison. For every comparison, the flag's present value is compared to the flag's past value and, if the two equal one another, then no synchronization is required as this means that no transition has occurred. The flag's present value is saved as the past value after every comparison. If the two values do not equal one another when compared, then a transition has occurred in that either the screen saver has been initiated or has been terminated. Either way, a synchronization is initiated. This approach not only forces a synchronization when a screen saver program is started, it also forces a synchronization when the screen saver program is turned off or terminated. If only the termination of a screen saver program is desired to cause an initiation of a synchronization, then extra logic that detects a specific transition, from a "screen saver running" state to a "screen saver not running" state, may be used to trigger the synchronization.

If the event to be detected is a user's login after the computer has been locked (usually due to inactivity on the computer), then the use of flags may again be used. A flag may be set to a predetermined value whenever the locking process is called and it be set to another value when the locking process terminates. The status of the locking process may be determined by an appropriate call to the operating system. As with the approach noted above for the screen saver program, a locking process flag's present value is compared to its previous value. If the two do not equal one another, then a transition in the state of the locking process has occurred. If the two do equal one another, then a transition has not occurred. A synchronization may thus be initiated when a transition is detected. A transition indicates that either a period of inactivity has caused the locking process to be called or that activity (the user's logging back in) has followed a period of inactivity and that, thus, the locking process has terminated. As with the above approach, the locking process flag's value is saved after every comparison to be used as the previous flag value for the next comparison.

If the computer 20 and the device 30 are both equipped with the capability to communicate with one another using a short-range wireless protocol such as the Bluetooth standard, the event which triggers the synchronization process could be the severing of the wireless link between the computer and the device or the establishment of such a wireless link. A synchronization process can be initiated once the presence of the device on the wireless link transitions from available to not available or from not available to available. Since the computer keeps track of the wireless devices connected to it, a software flag can be used to trigger the synchronization process. If the device is detected by the computer as being available via the wireless link, the flag can be set to one. If the device cannot be detected by the computer, then the flag is set to zero. The computer can thus be programmed to initiate a synchronization process when the flag transitions from a one value to a zero value. Such a transition would mean that the device has either left the range of the wireless receiver/transmitter on the computer or that the device has been turned off. Either way, a synchronization process would ensure that the user will not need to initiate a synchronization process when he checks his device for email and/or other data.

As noted above, the computer can also be programmed to initiate a synchronization process when a wireless link between the computer and the handheld device is established. Such a scenario would be useful for when the user returns to his desktop computer. When the user's handheld device is detected by the computer and the computer reestablishes a wireless link, this can be the event which triggers a synchronization process. To implement this, the software flag noted above may be used. To simplify matters, a synchronization process may be initiated by the computer upon any transition of the software flag. A flag transition from a zero value to a one value indicates the establishing of a wireless link while a flag transition from a one value to a zero value indicates a severing of such a link. The computer can be programmed to initiate a synchronization process once either of these transition is detected.

As an alternative, instead of having the computer detect the severing or the establishment of the wireless link, the handheld device may perform such a detection and may initiate the synchronization process. The handheld device can therefore detect either the presence or absence of such a wireless link, perhaps through the use of a similar software flag. Once a transition in the state of the wireless link is detected, the synchronization process may then be automatically initiated by the handheld device. The transition can be detected by saving a previous state of the software flag and comparing this with a current state of the same flag. Periodic checks on this flag while simultaneously saving the current flag state can ensure that changes in the availability of the wireless link are detected. Clearly, if the previous flag state differs from the current flag state, then there has been a transition and a synchronization process needs to be initiated.

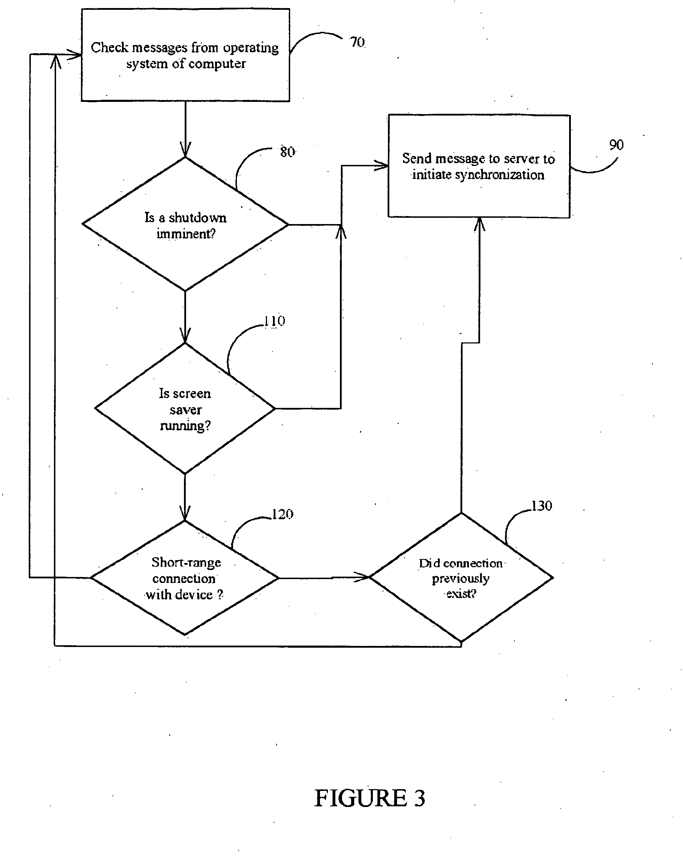

The above options may be implemented separately by different software modules which may be part of a larger software package. Alternatively, the three options given above may be implemented as a single module which may incorporate other tests for other events. Such a module would implement the logic illustrated in the flowchart of Fig 3.

Referring to Fig 3, the method commences with step 70, that of checking for messages from the operating system of the computer. A decision 80 then determines if a shutdown of the operating system is about to occur. This can be determined by, as explained above, checking if a specific shutdown message has been received by the operating system. If a shutdown is to occur, step 90 is that of sending a message to the server to cause the initiation of the synchronization process.

If a shutdown is not about to occur, decision 110 checks if a screen saver program is running. As noted above, this can be done by calling a specific function in the Windows operating system. Depending on the results of the function call, it can be determined if a screen saver is running or not. If it is, then step 90, that of initiating a synchronization by sending a message to the server, is executed.

In the event a screen saver program is not running, decision 120 determines if a short-range wireless connection between the computer and the device exists. If there is currently such a connection, the logic flow returns to step 70. If there is no connection, then decision 130 checks if such a connection previously existed. This may be done using a flag as explained above. Decision 130 can be as simple as checking the above noted flag. If the device was not previously connected to the computer, then the logic flow passes again to step 70. If the device was previously connected, then step 90 is executed. As noted above, decision 130 may be simplified by merely determining if the software flag has recently transitioned from one state to another. Such a transition would indicate that the wireless link has either been severed or reestablished. In either event, a synchronization process would be called for.

It should be clear that while Fig 3 illustrates checking for these specific events, it can be extended to check for any number of system/computer events which may signify that the user has left or is about to leave the computer or has returned to his computer.

It should further be clear that the synchronization process to be initiated is one that is known in the art and to persons skilled in the field of software engineering and wireless email applications.

While the above uses email data as the data being synchronized, other types of data may also be synchronized. PIM (Personal Information Manager) data such as contact information, telephone numbers, and the like may be synchronized as well using the above scheme.

Embodiments of the invention may be implemented in any conventional computer programming language. For example, preferred embodiments may be implemented in a procedural programming language (e.g. "C") or an object oriented language (e.g. "C++"). Alternative embodiments of the invention may be implemented as pre-programmed hardware elements, other related components, or as a combination of hardware and software components.

Embodiments can be implemented as a computer program product for use with a computer system. Such implementation may include a series of computer instructions fixed either on a tangible medium, such as a computer readable medium (e.g., a diskette, CD-ROM, ROM, or fixed disk) or transmittable to a computer system, via a modem or other interface device, such as a communications adapter connected to a network over a medium. The medium may be either a tangible medium (e.g., optical or electrical communications lines) or a medium implemented with wireless techniques (e.g., microwave, infrared or other transmission techniques). The series of computer instructions embodies all or part of the functionality previously described herein. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink wrapped software), preloaded with a computer system (e.g., on system ROM or fixed disk), or distributed from a server over the network (e.g., the Internet or World Wide Web). Of course, some embodiments of the invention may be implemented as a combination of both software (e.g., a computer program product) and hardware. Still other embodiments of the invention may be implemented as entirely hardware, or entirely software (e.g., a computer program product).

A person understanding the proposed solution may now conceive of alternative structures and embodiments or variations of the above all of which are intended to fall within the scope of the proposed solution as defined in the claims that follow.

## Claims

1. A method for ensuring data synchronization between specific data on a server (10) and data on a handheld computing device (30), in a communication system in which the handheld communication device can communicate with a computer (20) via a short range wireless link, the computer (20) is coupled to the server (10), and both the computer and the handheld communication device receive said specific data from the server, the method comprising:
detecting a change in status of the short range wireless link between said computer and said handheld computing device; and
automatically initiating a synchronization process on said server to synchronize said specific data between said server and said handheld computing device in response to detecting said change in status.

2. A method according to claim 1 wherein said change in status is caused by detecting that said handheld computing device (30) is beyond a range of said short range wireless link or by detecting that said handheld computing device has entered a range of said short range wireless link.

3. A method according to claim 1 or 2 wherein said specific data comprises electronic mail data.

4. A method according to any one of the preceding claims wherein said synchronization process synchronizes an email database on said server (10) with an email database on said handheld computing device (30).

5. A method according to any one of the preceding claims wherein said handheld computing device (30) is for receiving and sending emails independently of said computer (20).

6. A method according to any one of the preceding claims wherein said synchronization process is initiated from said handheld computing device(30).

7. A method according to any one of claims 1 to 5 wherein said synchronization process is initiated from said computer (20).

8. A system for ensuring data synchronization between specific data on a server (10) and data on a handheld computing device (30), in a communication system in which the handheld computing device can communicate with a computer (20) via a short range wireless link, the computer is coupled to the server, and both the computer and the handheld computing device receive said specific data from the server, the system comprising:
means for detecting a change in status of the short range wireless link between said computer and said handheld computing device; and
means for automatically initiating a synchronization process on said server (10) to synchronize said specific data between said server and said handheld computing device (30) in response to detecting said change in status.

9. A computer (20) having means for establishing a short range radio link with a handheld computing device, means for receiving specific data from a server, means for detecting a change in status of the short range wireless link between said computer and said handheld computing device, and being configured automatically to initiate a synchronization process on said server to synchronize said specific data between said server and said handheld computing device in response to detecting said change in status.

10. A handheld computing device (30) having means for establishing a short range radio link with a computer, means for receiving specific data from a server, means for detecting a change in status of the short range wireless link between said computer and said handheld computing device, and being configured automatically to initiate a synchronization process on said server to synchronize said specific data between said server and said handheld computing device in response to detecting said change in status.

11. A computer readable media having embodied thereon computer readable code for causing a computing device or system to perform the method of any one of claims 1 to 7.

## Patentansprüche

1. Verfahren zur Sicherstellung der Datensynchronisation zwischen spezifischen Daten auf einem Server (10) und Daten auf einem tragbaren Computergerät (30) in einem Kommunikationssystem, in dem das tragbare Computergerät über eine drahtlose Nahbereichsverbindung mit einem Computer (20) kommunizieren kann, der Computer (20) mit dem Server (10) gekoppelt ist und sowohl der Computer als auch das tragbare Computergerät die spezifischen Daten vom Server empfangen, das Verfahren umfassend:
das Erkennen einer Statusänderung der drahtlosen Nahbereichsverbindung zwischen dem Computer und dem tragbaren Computergerät; und
das automatische Initiieren eines Synchronisationsvorgangs auf dem Server, um als Reaktion auf das Erkennen der Statusänderung die spezifischen Daten zwischen dem Server und dem tragbaren Computergerät zu synchronisieren.

2. Verfahren gemäß Anspruch 1, wobei die Statusänderung **dadurch** verursacht wird, dass erkannt wird, dass sich das tragbare Computergerät (30) außerhalb einer Reichweite der drahtlosen Nahbereichsverbindung befindet, oder das erkannt wird, dass das tragbare Computergerät in eine Reichweite der drahtlosen Nahbereichsverbindung geraten ist.

3. Verfahren gemäß Anspruch 1 oder 2, wobei die spezifischen Daten E-Mail-Daten umfassen.

4. Verfahren gemäß einem der vorherigen Ansprüche, wobei der Synchronisationsvorgang eine E-Mail-Datenbank auf dem Server (10) mit einer E-Mail-Datenbank auf dem tragbaren Computergerät (30) synchronisiert.

5. Verfahren gemäß einem der vorherigen Ansprüche, wobei das tragbare Computergerät (30) zum Empfangen und Senden von E-Mails unabhängig von dem Computer (20) vorgesehen ist.

6. Verfahren gemäß einem der vorherigen Ansprüche, wobei der Synchronisationsvorgang von dem tragbaren Computergerät (30) initiiert wird.

7. Verfahren gemäß einem der Ansprüche 1 bis 5, wobei der Synchronisationsvorgang von dem Computer (20) initiiert wird.

8. System zur Sicherstellung der Datensynchronisation zwischen spezifischen Daten auf einem Server (10) und Daten auf einem tragbaren Computergerät (30) in einem Kommunikationssystem, in dem das tragbare Computergerät über eine drahtlose Nahbereichsverbindung mit einem Computer (20) kommunizieren kann, der Computer mit dem Server gekoppelt ist und sowohl der Computer als auch das tragbare Computergerät die spezifischen Daten vom Server empfangen, das System umfassend:
Mittel zum Erkennen einer Statusänderung der drahtlosen Nahbereichsverbindung zwischen dem Computer und dem tragbaren Computergerät; und
Mittel zum automatischen Initiieren eines Synchronisationsvorgangs auf dem Server (10), um als Reaktion auf das Erkennen der Statusänderung die spezifischen Daten zwischen dem Server und dem tragbaren Computergerät (30) zu synchronisieren.

9. Computer (20) mit Mitteln zum Herstellen einer Nahbereichsfunkverbindung mit einem tragbaren Computergerät, mit Mitteln zum Empfangen spezifischer Daten von einem Server, mit Mitteln zum Erkennen einer Statusänderung der drahtlosen Nahbereichsverbindung zwischen dem Computer und dem tragbaren Computergerät, und der so konfiguriert ist, dass es automatisch einen Synchronisationsvorgang auf dem Server initiiert, um als Reaktion auf das Erkennen der Statusänderung die spezifischen Daten zwischen dem Server und dem tragbaren Computergerät zu synchronisieren.

10. Tragbares Computergerät (30) mit Mitteln zum Herstellen einer Nahbereichsfunkverbindung mit einem Computer, mit Mitteln zum Empfangen spezifischer Daten von einem Server, mit Mitteln zum Erkennen einer Statusänderung der drahtlosen Nahbereichsverbindung zwischen dem Computer und dem tragbaren Computergerät, und das so konfiguriert ist, dass es automatisch einen Synchronisationsvorgang auf dem Server initiiert, um als Reaktion auf das Erkennen der Statusänderung die spezifischen Daten zwischen dem Server und dem tragbaren Computergerät zu synchronisieren.

11. Computerlesbares Medium, in dem computerlesbarer Code verkörpert ist, der in einem Computergerät oder -system bewirkt, dass das Verfahren gemäß einem der Ansprüche 1 bis 7 ausgeführt wird.

## Revendications

1. Un procédé destiné à assurer une synchronisation des données entre des données spécifiques sur un serveur (10) et des données sur un dispositif informatique portatif (30), dans un système de communication dans lequel le dispositif de communication portatif peut communiquer avec un ordinateur (20) via une liaison sans fil à courte portée, l'ordinateur (20) étant couplé au serveur (10) et à la fois l'ordinateur et le dispositif de communication portatif reçoivent lesdites données spécifiques du serveur, le procédé comprenant :
la détection d'un changement d'état de la liaison sans fil à courte portée entre ledit ordinateur et ledit dispositif informatique portatif, et
le lancement automatique d'un processus de synchronisation sur ledit serveur afin de synchroniser lesdites données spécifiques entre ledit serveur et ledit dispositif informatique portatif en réponse à la détection dudit changement d'état.

2. Un procédé selon la Revendication 1 où ledit changement d'état est causé par la détection que ledit dispositif informatique portatif (30) est en dehors d'une portée de ladite liaison sans fil à courte portée ou par la détection que ledit dispositif informatique portatif est entré dans une portée de ladite liaison sans fil à courte portée.

3. Un procédé selon la Revendication 1 ou 2 où lesdites données spécifiques comprennent des données de courrier électronique.

4. Un procédé selon l'une quelconque des Revendications précédentes où ledit processus de synchronisation synchronise une base de données de courrier électronique sur ledit serveur (10) avec une base de données de courrier électronique sur ledit dispositif informatique portatif (30).

5. Un procédé selon l'une quelconque des Revendications précédentes où ledit dispositif informatique portatif (30) est destiné à recevoir et à envoyer des messages électroniques indépendamment dudit ordinateur (20).

6. Un procédé selon l'une quelconque des Revendications précédentes où ledit processus de synchronisation est lancé à partir dudit dispositif informatique portatif (30).

7. Un procédé selon l'une quelconque des Revendications 1 à 5 où ledit processus de synchronisation est lancé à partir dudit ordinateur (20).

8. Un système destiné à assurer une synchronisation des données entre des données spécifiques sur un serveur (10) et des données sur un dispositif informatique portatif (30), dans un système de communication dans lequel le dispositif de communication portatif peut communiquer avec un ordinateur (20) via une liaison sans fil à courte portée, l'ordinateur étant couplé au serveur et à la fois l'ordinateur et le dispositif de communication portatif reçoivent lesdites données spécifiques du serveur, le système comprenant :
un moyen de détecter un changement d'état de la liaison sans fil à courte portée entre ledit ordinateur et ledit dispositif informatique portatif, et
un moyen de lancer automatiquement un processus de synchronisation sur ledit serveur (10) afin de synchroniser lesdites données spécifiques entre ledit serveur et ledit dispositif informatique portatif (30) en réponse à la détection dudit changement d'état.

9. Un ordinateur (20) possédant un moyen d'établir une liaison radio à courte portée avec un dispositif informatique portatif, un moyen de recevoir des données spécifiques à partir d'un serveur, un moyen de détecter un changement d'état de la liaison sans fil à courte portée entre ledit ordinateur et ledit dispositif informatique portatif, et étant configuré de façon à lancer automatiquement un processus de synchronisation sur ledit serveur afin de synchroniser lesdites données spécifiques entre ledit serveur et ledit dispositif informatique portatif en réponse à la détection dudit changement d'état.

10. Un dispositif informatique portatif (30) possédant un moyen d'établir une liaison radio à courte portée avec un ordinateur, un moyen de recevoir des données spécifiques à partir d'un serveur, un moyen de détecter un changement d'état de la liaison sans fil à courte portée entre ledit ordinateur et ledit dispositif informatique portatif, et étant configuré de façon à lancer automatiquement un processus de synchronisation sur ledit serveur afin de synchroniser lesdites données spécifiques entre ledit serveur et ledit dispositif informatique portatif en réponse à la détection dudit changement d'état.

11. Un support lisible par ordinateur contenant du code lisible par ordinateur destiné à amener un dispositif ou système informatique à exécuter le procédé selon l'une quelconque des Revendications 1 à 7.
